Europäisches Patentamt

European Patent Office

Office européen des brevets

(11) Veröffentlichungsnummer: **0 254 062**
**A2**

(12) **EUROPÄISCHE PATENTANMELDUNG**

(21) Anmeldenummer: **87109103.9**

(22) Anmeldetag: **24.06.87**

(51) Int. Cl.4: **H04N 5/10**

(30) Priorität: **23.07.86 DE 3624856**

(43) Veröffentlichungstag der Anmeldung:
**27.01.88 Patentblatt 88/04**

(84) Benannte Vertragsstaaten:
**CH DE ES FR GB IT LI SE**

(71) Anmelder: **Blaupunkt-Werke GmbH**
**Robert-Bosch-Strasse 200**
**D-3200 Hildesheim(DE)**

(72) Erfinder: **Katthän, Walter**
**Sandkamp 21**
**D-3200 Hildesheim(DE)**
Erfinder: **Engel, Gerhard**
**Ernst-Abbe-Strasse 45**
**D-3200 Hildesheim(DE)**

(74) Vertreter: **Eilers, Norbert, Dipl.-Phys.**
**Robert-Bosch-Strasse 200**
**D-3200 Hildesheim(DE)**

(54) Schaltungsanordnung zum Erkennen eines Videosignals.

(57) Bei einer Schaltungsanordnung zum Erkennen eines Videosignals ist eine zeilenfrequent abgestimmte Stufe, welcher das Videosignal zuführbar ist, ein Integrationsglied und ein Schwellwertschalter vorgesehen. Dabei kann die zeilenfrequent abgestimmte Stufe eine Resonanzschaltstufe oder eine PLL-Schaltung mit einem Zeilenoszillator sein.

Fig.1

EP 0 254 062 A2

## Schaltungsanordnung zum Erkennen eines Videosignals

Die Erfindung geht aus von einer Schaltungsanordnung nach der Gattung des Hauptanspruchs.

Insbesondere um den Tonkanal eines Fernsehempfangsgeräts während des Abstimmvorgangs stumm zu schalten und zur Verhinderung des Empfangs anderer als Fernsehsender sind Schaltungsanordnungen erforderlich, welche das Erkennen eines Videosignals ermöglichen. Bei bekannten Schaltungen dieser Art werden die mit Hilfe des Amplitudensiebs gewonnenen Zeilenimpulse ausgewertet. Entsprechende Schaltungsanordnungen sind in bekannten integrierten Schaltkreisen, welche zur Erzeugung und Synchronisierung der Zeilenimpulse im Fernsehempfangsgerät dienen, vorgesehen.

Diese in der Fernsehtechnik bekannten Schaltungen (z. B. TDA 2595) sind jedoch auf Videosignalformen wie CCIR-Fernsehsignale beschränkt. In der Satellitenempfangstechnik kommt jedoch heute schon eine Anzahl anderer Signalformen wie D2-MAC, PCM 2, OAK oder andere verschlüsselte Videosignale zur Anwendung. Dadurch besteht das Problem, mit geringem Aufwand viele verschiedene Videosignale zu erkennen. Die Gemeinsamkeit der bisher genannten Videosignale ist die Periodizität mit Zeilenfrequenz.

Ein bekannter Lösungsversuch, der hier ansetzt, ist das schmalbandige Filtern und anschließende Gleichrichten des Videosignals zum Nachweisen des Vorhandenseins der Zeilenfrequenz. Dieser Lösungsversuch scheitert jedoch an dem typischerweise starken Rauschen, das beim Fehlen eines Senders in der Videoebene auftritt, da im Rauschen ebenfalls ein zeilenfrequenter Anteil vorhanden ist.

Die erfindungsgemäße Schaltungsanordnung mit den kennzeichnenden Merkmalen des Hauptanspruchs wertet demgegenüber zusätzlich die konstante Phase des zeilenfrequenten Videosignals aus und ermöglicht so ein betriebssicheres Erkennen von Videosignalen verschiedener Signalformen einschließlich des herkömmlichen Fernsehsignals.

Durch die in den Unteransprüchen aufgeführten Maßnahmen sind vorteilhafte Weiterbildungen und Verbesserungen der im Hauptanspruch angegebenen Schaltungsanordnung möglich.

Ausführungsbeispiele der Erfindung sind in der Zeichnung an Hand mehrerer Figuren dargestellt und in der nachfolgenden Beschreibung näher erläutert. Es zeigt:

Fig. 1 ein Blockschaltbild eines ersten Ausführungsbeispiels,

Fig. 2 ein detaillierteres Schaltbild des ersten Ausführungsbeispiels,

Fig. 3 ein Blockschaltbild eines zweiten Asuführungsbeispiels und

Fig. 4 ein Ausführungsbeispiel für eine Weiterbildung der Erfindung.

Gleiche Teile sind in den Figuren mit gleichen Bezugszeichen versehen.

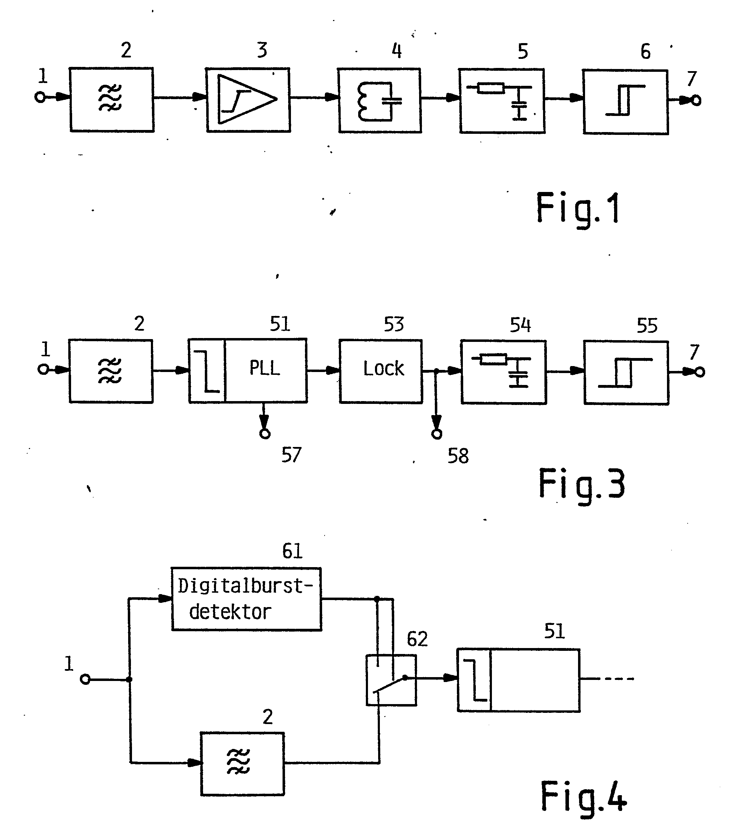

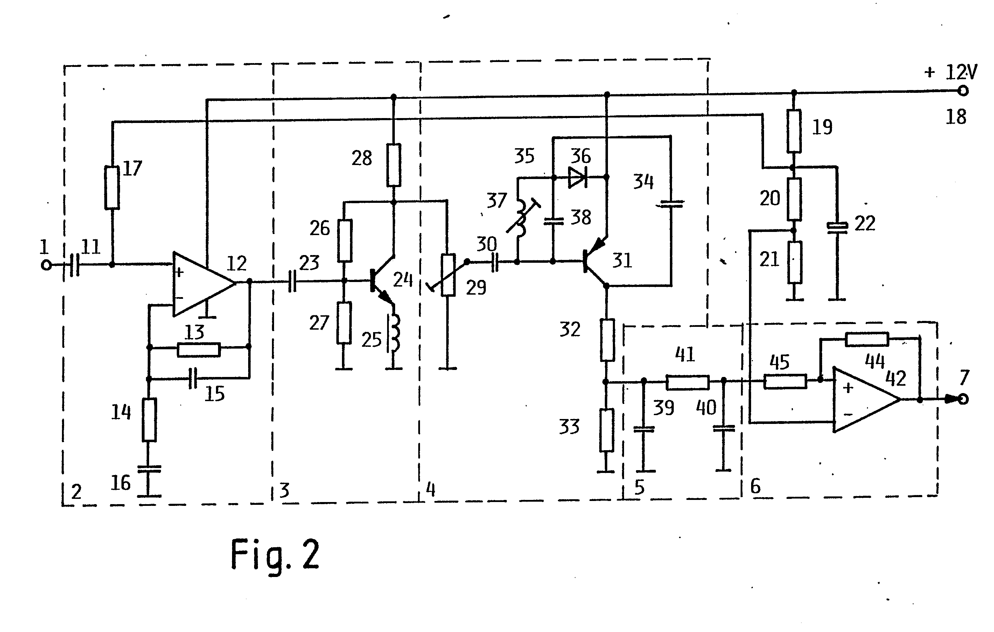

Dem in Fig. 1 dargestellten Ausführungsbeispiel werden bei 1 Signale, welche Videosignale sein können, zugeführt. Über einen Bandpaß 2, dessen Übertragungsbereich die Zeilenfrequenz einschließt, gelangen die Signale zu einem Begrenzerverstärker 3. An den Begrenzerverstärker 3 schließt sich eine im Zusammenhang mit Fig. 2 näher erläuterte Resonanzschaltstufe 4 an, deren Ausgang über einen Tiefpaß 5 mit einem Schwellwertschalter 6 verbunden ist. Am Ausgang 7 des Schwellwertschalters 6 steht eine Schaltspannung zur Verfügung, welche einen vorgegebenen Pegel einnimmt, wenn am Eingang 1 Videosignale anliegen und welche bei Fehlen von Videosignalen am Eingang 1 den anderen Pegel aufweist.

In Fig. 2 sind die im Blockschaltbild nach Fig. 1 dargestellten Schaltungen 2, 3, 4, 5 und 6 detaillierter dargestellt und der Übersichtlichkeit halber durch gestrichelte Linien voneinander getrennt. Der Bandpaß 2, welchem das zu überprüfende Signal über den Eingang 1 und einen Koppelkondensator 11 zugeführt ist, besteht aus einem Operationsverstärker 12, der über ein aus den Widerständen 13, 14 und den Kondensatoren 15, 16 bestehendes Netzwerk gegengekoppelt ist.

Der nichtinvertierende Eingang des Operationsverstärkers wird über einen Widerstand 17 mit einer Vorspannung versorgt, welche aus der bei 18 zugeführten positiven Betriebsspannung mit Hilfe eines Spannungsteilers 19, 20, 21 abgeleitet ist. Dem Spannungsteiler ist ferner ein Siebkondensator 22 zugeordnet.

Vom Ausgang des Operationsverstärkers 3, der den Ausgang des Bandpasses 2 bildet, wird das somit gefilterte Signal über einen weiteren Koppelkondensator 23 dem Begrenzerverstärker 3 zugeführt. Dieser wird aus einem in Emitter-Grundschaltung geschalteten Transistor 24 gebildet, in dessen Emitter-Zuleitung eine Induktivität 25 eingeschaltet ist. Die Basisspannung wird mit Hilfe des Spannungsteilers 26, 27 aus der Kollektorspannung abgeleitet, wodurch eine Spannungsgegenkopplung gegeben ist. Der Arbeitswiderstand 28 des Transistors 24 ist mit dem positiven Pol 18 der Spannungsquelle verbunden. Vom Kollektor des Transistors 24 kann das begrenzte Signal über einen Potentiometer 29 und einen Koppelkondensator 30 der Resonanzschaltstufe zugeführt werden.

Der Begrenzerverstärker hat nicht nur die Aufgabe einer Signalpegelung, aufgrund seiner Dimensionierung - der Transistor 24 wird stark in der Sättigung betrieben - verbessert er durch das dadurch entstehende Verhalten die Erkennungssicherheit bei starken Rauschsignalen.

Die Resonanzschaltstufe 4 besteht aus einem Transistor 31, dessen Emitter mit dem positiven Pol 18 der Betriebsspannungsquelle verbunden ist und dessen Kollektor über einen als Spannungsteiler 32, 33 ausgeführten Arbeitswiderstand an Massepotential angeschlossen ist. Vom Kollektor des Transistors 31 wird die Ausgangsspannung des Transistors 31 über einen Kondensator 34 zum Verbindungspunkt 35 zwischen der Diode 36 und einem Parallelresonanzkreis zurückgeführt, der aus der Induktivität 37 und dem Kondensator 38 besteht. Eine solche Resonanzschaltstufe wurde ursprünglich von Hans Schumacher für Fernsteuerzwecke vorgeschlagen und ist beispielsweise in Hans Dieter Heck: "Handbuch moderner Transistorfernsteuerung, zweite Auflage, Seite 92 bis 95" genauer beschrieben.

Solange die zugeführte Wechselspannung sich nicht im Bereich der Resonanzfrequenz des Resonanzkreises 37, 38 befindet, ist der Transisor 31 nichtleitend. Entspricht jedoch die Frequenz der zugeführten Wechselspannung der Resonanzfrequenz oder liegt nahe bei ihr, so wird die Impedanz des Resonanzkreises 37, 38 größer, so daß negative Halbwellen den Transistor 31 öffnen, worauf wiederum über den Kondensator 34 dem Punkt 35 eine Wechselspannung zugeführt wird. Dieses hat zur Folge, daß sich über der Diode 36 eine negative Gleichspannung aufbaut, wodurch der Transistor weiter in den leitenden Zustand gesteuert wird.

Der Verbindungspunkt der Widerstände 32, 33 stellt den Ausgang der Resonanzschaltstufe 4 dar, an den ein Tiefpaß 5 angeschlossen ist, der aus den Kondensatoren 39, 40 und dem Widerstand 41 besteht. Dieser Tiefpaß verhindert, daß bei kurzen Unterbrechungen der zeilenfrequenten Anteile innerhalb der zugeführten Videosignale die Videosignale kennzeichnende Spannung unterbrochen wird. Dieses könnte beispielsweise bei den üblichen Fernsehsignalen innerhalb des vertikalfrequenten Austastintervalls erfolgen.

Der Operationsverstärker 42 ist als Schmitt-Trigger bzw. Schwellwertschalter 6 geschaltet. Dazu ist zwischen seinem Ausgang 7 und dem nichtinvertierenden Eingang ein Mitkopplungswiderstand 44 vorgesehen, während das Eingangssignal über einen Koppelwiderstand 45 zugeführt wird. Der invertierende Eingang des Operationsverstärkers 42 wird vom Spannungsteiler 20, 21 mit einer konstanten Spannung beaufschlagt. Am Ausgang 7 steht dann, wie bereits oben beschrieben, das Schaltsignal zur weiteren Verwendung zur Verfügung.

Bei dem Ausführungsbeispiel nach Fig. 3 ist nach dem Eingang 1 ebenfalls ein Bandpaß 2 vorgesehen. Anstelle des Begrenzerverstärkers 3 und der Resonanzschaltstufe ist jedoch eine PLL-Schaltung 51 vorgesehen, welche eingangsseitig bereits einen Begrenzer umfaßt. Derartige PLL-Schaltungen sind als integrierte Schaltkreise, beispielsweise unter der Typenbezeichnung CD 4046, erhältlich.

In an sich bekannter Weise wird in der PLL-Schaltung mit Hilfe einer Phasenvergleichsschaltung ein steuerbarer Oszillator gesteuert. Dazu wird dem steuerbaren Oszillator eine Steuerspannung von der Phasenvergleichsschaltung zugeführt, während die Ausgangsspannung des steuerbaren Oszillators der Phasenvergleichsschaltung zugeleitet wird. Die Steuerspannung gelangt ferner zu einem sogenannten Lock-Detektor 53, mit dessen Hilfe festgestellt wird, ob der steuerbare Oszillator synchronisiert bzw. "eingerastet" ist. Wenn dieses der Fall ist, ist es ein Zeichen dafür, daß in dem bei 1 zugeführten Signal zeilenfrequente Anteile vorhanden sind. Eine entsprechende Spannung wird dann über einen Integrator 54 einem Schwellwertschalter 55 zugeführt, an dessen Ausgang 7 ein Schaltsignal zur Verfügung steht.

Die in Fig. 3 dargestellte Schaltung hat ferner den Vorteil, daß ihr an den Ausgängen 57, 58 horizontal-bzw. vertikalfrequente Impulse (H, V) entnommen werden können. Diese können beispielsweise für eine aktive Klemmschaltung verwendet werden.

MAC-Signale enthalten im Falle eines Graubildes praktisch keine zeilenfrequenten Anteile. Um auch hier ein sicheres Erkennen des Vorliegens eines Videosignals, in diesem Fall also eines MAC-Signals, zu ermöglichen, wird bei der Schaltungsanordnung nach Fig. 4 in einem Digital-Burst-Detektor 61 das bei 1 zugeführte Signal daraufhin untersucht, ob der für MAC-Signale typische digitale Ton-Burst vorhanden ist. Der Digital-Burst-Detektor 61 ist in einfacher Weise mit einem integrierten Schaltkreis, welcher eine PLL-Schaltung und einen Lock-Detekor umfaßt, realisierbar. Ein geeigneter integrierter Schaltkreis ist unter der Typenbezeichnung NE 567 erhältlich.

Das Ausgangssignal des Digital-Burst-Detektors 61 ist ein Zeilenimpuls anstelle des Ton-Bursts und wird über einen gesteuerten Schalter 62 anstelle des Ausgangssignals des Bandpasses 2 der PLL-Schaltung 51 zugeführt und weiter, wie im Zusammenhang mit Fig. 3 beschrieben, verarbeitet. Der Schalter 62 wird von dem Ausgangssignal des Digital-Burst-Detektors 61 gesteuert und befindet sich in der oberen Position, wenn ein Digital-Burst vorhanden ist. Ist kein Digital-Burst vorhanden, also liegt kein MAC-Signal vor, so arbeitet die Schaltungsanordnung nach Fig. 4 wie die Schaltungsanordnung nach Fig. 3.

## Ansprüche

1. Schaltungsanordnung zum Erkennen eines Videosignals, gekennzeichnet durch eine zeilenfrequent abgestimmte Stufe (4, 51), welcher das Videosignal zuführbar ist, ein Integrationsglied (5, 54) und einen Schwellwertschalter (6, 55).

2. Schaltungsanordnung nach Anspruch 1, dadurch gekennzeichnet, daß die zeilenfrequent abgestimmte Stufe eine Resonanzschaltstufe (4) ist.

3. Schaltungsanordnung nach Anspruch 2, dadurch gekennzeichnet, daß die Resonanzschaltstufe (4) von einem in Emitter-Grundschaltung angeordneten Transistor (31) gebildet wird, dessen Basis-Emitter-Strecke über die Reihenschaltung einer Diode (36) und eines Prallelresonanzkreises (37, 38) überbrückt ist und dessen Kollektor über einen Kondensator (34) mit dem Verbindungspunkt (35) zwischen dem Parallelresonanzkreis (37, 38) und der Diode (36) verbunden ist.

4. Schaltungsanordnung nach Anspruch 1, dadurch gekennzeichnet, daß die zeilenfrequent abgestimmte Stufe eine PLL-Schaltung (51) mit einem Zeilenoszillator ist.

5. Schaltungsanordnung nach einem der vorhergehenden Ansprüche, dadurch gekennzeichnet, daß das Videosignal der zeilenfrequent abgestimmten Stufe (4, 51) über einen Bandpaß (2) zuführbar ist.

6. Schaltungsanordnung nach einem der Ansprüche 1 bis 4, dadurch gekennzeichnet, daß das Videosignal der zeilenfrequent abgestimmten Stufe (4, 51) über einen Tiefpaß zuführbar ist.

7. Schaltungsanordnung nach einem der vorhergehenden Ansprüche, dadurch gekennzeichnet, daß in der Zuleitung des Videosignals ein Begrenzerverstärker (3) angeordnet ist.

8. Schaltungsanordnung nach Anspruch 7, dadurch gekennzeichnet, daß der Begrenzerverstärker derart dimensioniert ist, daß er stark in der Sättigung betrieben wird.

9. Schaltungsanordnung nach einem der Ansprüche 1 bis 6, dadurch gekennzeichnet, daß in der Zuführung des Videosignals ein Regelverstärker angeordnet ist.

10. Schaltungsanordnung nach Anspruch 5, dadurch gekennzeichnet, daß dem Bandpaß (2) ein Digital-Burst-Detektor (61) parallelgeschaltet ist.

R.-Nr. 1930

Fig.1

Fig.3

Fig.4

Fig. 2

R.-Nr. 1930

0 254 062